# EUROPÄISCHE PATENTSCHRIFT

(11) **EP 1 432 059 B1**
(45) Veröffentlichungstag und Bekanntmachung des Hinweises auf die Patenterteilung: **05.09.2007**
(21) Anmeldenummer: 03012521.5
(22) Anmeldetag: 02.06.2003
(51) Int. Cl.: H01M 8/02

(54) **Separatorplatte mit mehreren parallellaufenden Fluidkanälen für eine Brennstoffzelle**
Separator plate with parallel fluid channels for a fuel cell
Plaque séparatrice ayant des canaux pour fluides parallèles pour utilisation dans une pile à combustible

(30) Priorität: 01.06.2002 DE 10224397
(43) Veröffentlichungstag der Anmeldung: 23.06.2004
(73) Patentinhaber: Behr GmbH & Co. KG, 70469 Stuttgart (DE)
(72) Erfinder: Damsohn, Herbert, Dr.-Ing., 73773 Aichwald (DE); Kaiser, Wolfram, 79848 Bonndorf (DE); Watzlawski, Markus, 73760 Ostfildern (DE)
(74) Vertreter: Grauel, Andreas

(56) Entgegenhaltungen:
- WO-A-96/00453
- WO-A-02/071521
- DE-A- 10 015 360
- DE-A- 10 054 444
- DE-A- 10 127 322
- DE-A- 19 953 404

## Beschreibung

Die Erfindung betrifft einen Brennstoffzellenstapel zur Gewinnung von elektrischem Strom, der aus zumindest einer Brennstoffzelle besteht.

Die Umwandlung von chemischer in elektrische Energie mittels Brennstoffzellen stellt eine effiziente und umweltfreundliche Methode zur Gewinnung von elektrischem Strom aus den Betriebsmedien Wasserstoff und Sauerstoff dar. Dabei finden üblicherweise zwei räumlich getrennte Elektrodenreaktionen statt, bei denen Elektronen freigesetzt bzw. gebunden werden. Ein Beispiel für zwei korrespondierende Elektrodenreaktionen sind folgende Reaktionen:

H₂⇒2H⁺+2e⁻ (Anodische Reaktion)

2H⁺+2e⁻+1/2O₂⇒H₂O (kathodische reaktion)

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Brennstoffzellen aufeinandergestapelt und ein Brennstoffzellenstapel als Stromquelle verwendet.

Eine Brennstoffzelle besteht dabei aus einer Elektrolyteinheit, welche die Reaktanden Wasserstoff und Sauerstoff voneinander trennt und eine lonenleitfähigkeit, insbesondere eine H⁺-Protonenleitfähigkeit, aufweist, sowie aus zwei mit Katalysatormaterial belegten Elektroden, die unter anderem zum Abgriff des von der Brennstoffzelle erzeugten elektrischen Stroms erforderlich sind.

Die Reaktanden Wasserstoff und Sauerstoff und das Reaktionsprodukt Wasser sowie gegebenenfalls ein Kühlmittel zum Abtransport überschüssiger Reaktionswärme strömen durch Fluidkanäle, wobei die Reaktanden nicht notwendigerweise in reiner Form vorliegen müssen. Beispielsweise kann das Fluid auf der Kathodenseite Luft sein, deren Sauerstoff an der Reaktion teilnimmt. Insbesondere bei Verwendung eines Kühlmittels wird durch eine thermische Verbindung der jeweiligen Fluidkanäle für einen ausreichenden Wärmeübertrag zwischen den jeweiligen Fluiden gesorgt.

In der DE 100 15 360 A1 wird eine Separatorplatte für Brennstoffzellen beschrieben, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem für ein Kühlmittel und an den Außenflächen jeder Platte ein Kanalsystem für Gasströme.

Während des Betriebes von Brennstoffzellen mit derartigen Separatorplatten wird durch den Einsatz eines Kühlmittels die Temperatur der Reaktanden über einen Großteil der Fläche der Platten auf einem im wesentlichen konstanten Niveau gehalten.

Für den Transportvorgang der lonen, insbesondere Protonen, innerhalb einer Elektrolyteinheit ist zumeist ein gewisses Maß an Feuchtigkeit in der Elektrolyteinheit erforderlich. Aus diesem Grund wird üblicherweise durch eine Befeuchtung der Reaktanden der Taupunkt der jeweiligen Betriebsgase in den Bereich der Betriebstemperatur der Brennstoffzelle (in der Regel 60-80°C) angehoben; wodurch ein Austrocknen der Elektrolyteinheit und ein damit verbundener Leistungsverlust der Brennstoffzelle vermieden wird.

Aufgrund einer Anreicherung zumindest eines Betriebsgases mit dem Reaktionsprodukt Wasser steigt der Taupunkt des Betriebsgases während des Strömens durch die Brennstoffzelle sehr schnell über die Betriebstemperatur. Daraus resultiert eine Ansammlung von flüssigem Wasser in dem jeweiligen Strömungskanal, die sich nachteilig auf die Leistungsausbeute der Brennstoffzelle auswirkt.

Die Aufgabe der Erfindung ist es, einen Brennstoffzellenstapel mit gesteigerter Leistungsausbeute bereitzustellen.

Diese Aufgabe wird durch einen Brennstoffzellenstapel ,mit den Merkmalen des Anspruchs 1 gelöst.

Gemäß Anspruch 1 besteht ein erfindungsgemäßer Brennstoffzellenstapel aus zumindest einer Brennstoffzelle zur Gewinnung von elektrischer Energie. Bevorzugt besteht der Brennstoffzellenstapel aus mehreren elektrisch in Serie geschalteten Brennstoffzellen, wodurch eine gewünschte elektrische Spannung erreichbar ist. Die zumindest eine Brennstoffzelle weist zumindest einen Elektrolyten, der durchlässig für lonen wie beispielsweise Wasserstofflonen ist, und zwei elektrisch leitfähige Elektroden auf.

Insbesondere zur räumlichen Trennung jeweils zweier Brennstoffzellen weist der Brennstoffzellenstapel Separatoreinheiten auf, die jeweils zumindest einen ersten Fluidkanal für ein erstes Fluid, wie beispielsweise ein Kühlmittel, aufweisen. Zumindest ein zweiter Fluidkanal dient der Beaufschlagung einer Elektrode mit einem Fluid, insbesondere mit einem Prozeßgas. Bevorzugt weist eine Separatoreinheit mehrere erste und mehrere zweite Fluidkanäle auf, damit ein erstes und ein zweites Fluid flächenhaft verteilbar sind.

Der zumindest eine erste und der zumindest eine zweite Fluidkanal sind thermisch miteinander verbunden, damit ein Wärmeaustausch zwischen den zumindest zwei Fluiden möglich ist. Der zumindest eine erste und der zumindest eine zweite Fluidkanal können beispielsweise durch eine Platte getrennt sein, die Teil einer Separatoreinheit ist. Insbesondere können die ersten und/oder die zweiten Fluidkanäle als Vertiefungen in die Platte mittels eines Prägeverfahrens eingeprägt sein.

Die Aufgabe der Erfindung wird dabei dadurch gelöst, daß der zumindest eine zweite Fluidkanal im wesentlichen über seine gesamte Länge im wesentlichen parallel zu dem zumindest einen ersten Fluidkanal angeordnet ist.

Dadurch wird vorteilhaft ein Temperaturprofil entlang des zumindest einen ersten Fluidkanals über eine thermische Verbindung auf den zumindest einen zweiten Fluidkanal übertragen, wodurch sich entlang des zweiten Fluidkanals ein Temperaturprofil ausbildet, das dem Temperaturprofil des ersten Fluidkanals entspricht oder zumindest ähnlich ist.

Zwei Fluidkanäle sind im Sinne der vorliegenden Erfindung parallel zueinander, wenn sie vorwiegend nebeneinander verlaufen. Das bedeutet, daß zwei Fluidkanäle, die nur abschnittsweise in verschiedenen Richtungen verlaufen, beispielsweise in Bereichen von Umlenkungen, ebenfalls als parallel zueinander anzusehen sind. Auch Fluidkanäle, die bereichsweise auseinanderlaufen, insbesondere im Bereich von Zuführungen zu Verteil- oder Sammelkammern, sind im wesentlichen parallel zueinander, wenn die Fluidkanäle in einem wesentlichen Bereich, wie beispielsweise einem Bereich einer Elektrode einer Brennstoffzelle, vorwiegend nebeneinander verlaufen.

Durch die Parallelität des zumindest einen zweiten Fluidkanals zu dem zumindest einen ersten Fluidkanal ist ein Temperaturprofil zumindest eines Betriebsgases entlang des zumindest einen zweiten Fluidkanals derart einstellbar, daß der Taupunkt des zumindest einen Betriebsgases in einem weiten Bereich der betreffenden Brennstoffzelle die Temperatur des Betriebsgases nicht überschreitet. Dies bedeutet, daß ein Teil des bei der Stromgewinnung anfallenden Wassers nicht in flüssiger Form transportiert werden muß.

Gemäß einer besonders bevorzugten Ausführungsform eines erfindungsgemäßen Brennstoffzellenstapels steigt im Betrieb der zumindest einen Brennstoffzelle die Temperatur eines Fluids entlang des zumindest einen zweiten Fluidkanals stetig an. Dies wird auf besonders bevorzugte und einfache Weise durch eine gleichgerichtete Durchströmung der ersten und zweiten Fluidkanäle erreicht. Besonders vorteilhaft ist ein stetig ansteigendes Temperaturprofil, bei dem der Taupunkt des zumindest einen Betriebsgases in dem gesamten Fluidkanal des Betriebsgases kleiner oder gleich der Temperatur des Betriebsgases ist, so daß einerseits wenig oder kein flüssiges Wasser in der betreffenden Brennstoffzelle anfällt und andererseits dem Elektrolyten durch den ungesättigten Gasstrom kein oder nur wenig Wasser entzogen wird. Dies wirkt sich positiv auf die Leistungsausbeute der betreffenden Brennstoffzelle und damit der Brennstoffzelleneinheit aus.

Zusätzlich wird ein Eintritt eines Fluids, beispielsweise eines Betriebsgases in den zumindest einen zweiten Fluidkanal mit einer verhältnismäßig geringen Temperatur ermöglicht. Wird das Fluid vor dem Eintritt in den zweiten Fluidkanal befeuchtet, um beispielsweise eine Austrocknung einer Elektrolyteinheit zu vermeiden, so ist aufgrund der geringen Eintrittstemperatur des Fluids der Energieaufwand für eine Befeuchtung desselben gegenüber einer Brennstoffzelle mit höherer Eintrittstemperatur reduziert. Mit dieser Energieersparnis ist eine weitere Erhöhung der Leistungsausbeute des Brennstoffzellenstapels verbunden.

Gemäß einer weiteren bevorzugten Ausbildungsform der Erfindung fällt im Betrieb der zumindest einen Brennstoffzelle die Temperatur eines Fluids entlang des zumindest einen zweiten Fluidkanals stetig ab. Dies wird besonders vorteilhaft durch entgegengesetzte Strömungsrichtungen der Fluide entlang des ersten und des zweiten Fluidkanals erreicht.

Ein stetiger Temperaturabfall ist besonders dann zu bevorzugen, wenn das Fluid in dem zumindest einen zweiten Fluidkanal während des Betriebes der Brennstoffzelle nicht mit Wasser angereichert wird, sondern einer Befeuchtung eines Elektrolyten und damit einem verbesserten lonentransport innerhalb des Elektrolyten dient und gegebenenfalls zu diesem Zweck vor dem Eintritt in den zweiten Fluidkanal vorbefeuchtet wird. Durch die Befeuchtung des Elektrolyten wird entlang des zweiten Fluidkanals Wasser verbraucht, so daß der Taupunkt des Fluids entlang des zweiten Fluidkanals abfällt. Fällt die Temperatur entlang des zweiten Fluidkanals ebenfalls ab, wird ein Abfall der relativen Feuchtigkeit des Fluids in dem zweiten Fluidkanal vermieden oder zumindest verringert, so daß die Befeuchtung des Elektrolyten gefördert wird.

In einer bevorzugten Weiterbildung der Erfindung ist je eine Kammer zur Verteilung je eines Fluids auf mehrere erste beziehungsweise zweite Fluidkanäle und zumindest je eine Kammer zur Sammlung je eines Fluids aus den ersten beziehungsweise zweiten Fluidkanälen vorgesehen. Durch eine Integration der Kammern in den Brennstoffzellenstapel wird eine kompakte Bauweise erreicht. Insbesondere bei mehreren sich abwechselnden ersten und zweiten Fluidkanälen wird durch integrierte Kammern mit Hilfe einer geeigneten Anordnung der Kanäle ein besonders einfacher Aufbau des Brennstoffzellenstapels ermöglicht.

Die Verteilung und/oder Sammlung des Fluids geschieht über Verteilungskanäle, die zwischen der je einen Kammer und den jeweiligen Fluidkanälen derart angeordnet sind, daß Fluidkanäle, die verschiedenen Fluiden zugeordnet sind, nicht miteinander kommunizieren. Bevorzugt werden die Verteilungskanäle durch zumindest stellenweise miteinander kommunizierende Vertiefungen zweier benachbarter Platten gebildet. Besonders bevorzugt sind die Verteilungskanäle Teile der Fluidkanäle beziehungsweise werden mit den Fluidkanälen zusammen gefertigt.

Gemäß einer bevorzugten Ausgestaltung weist zumindest eine Separatoreinheit zwei Platten auf, zwischen denen der zumindest eine erste Fluidkanal angeordnet ist. Sind die Platten, wie Folien, dünn ausgebildet, sind sie, beispielsweise durch ein Prägeverfahren, sehr einfach mit Vertiefungen, die der Bildung von Fluidkanälen dienen können, versehbar. Die Fluidkanäle kommen durch Vertiefungen in einer Folie oder Platte zustande, die gegenüber einer ebenen Oberfläche einer benachbarten Folie oder Platte angeordnet sind. Genauso gut können Vertiefungen in zwei benachbarten Folien und/oder Platten einander gegenüber angeordnet sein, so daß zumindest ein Fluidkanal durch mehrere Vertiefungen gemeinsam gebildet wird.

Besonders vorteilhaft weist zumindest eine Folie oder Platte auf zwei Seiten Vertiefungen zur Bildung von Fluidkanälen auf. Insbesondere bei einer sehr dünnen Folie oder Platte bilden Vertiefungen auf einer Seite Erhebungen auf der gegenüberliegenden Seite, wobei zwischen jeweils zwei Erhebungen auf der gegenüberliegenden Seite wiederum Vertiefungen gebildet werden. Auf diese Weise kann in einem Arbeitsgang eine Folie oder Platte mit einem Vertiefungsprofil auf zwei Seiten versehen werden, wobei ein Profil auf einer Seite komplementär zu einem Profil auf der gegenüberliegenden Seite ist.

Gemäß einer weiteren bevorzugten Ausgestaltung weist zumindest eine Separatoreinheit drei Platten auf. Erste Fluidkanä!e sind auf zumindest einer Seite einer mittleren Platte angeordnet. Besonders bevorzugt befinden sich auf beiden Seiten einer mittleren Platte erste Fluidkanäle, so daß auf den beiden Seiten der zumindest einen Separatoreinheit verschiedene Temperaturprofile entlang zweiter Fluidkanäle einstellbar sind.

Gemäß einer bevorzugten Weiterbildung besteht die zumindest eine Folie oder Platte aus einem elektrisch leitfähigen Material, wie beispielsweise einem Metall. Damit können die Elektroden ohne zusätzlichen Aufwand kontaktiert werden. Insbesondere bei einer elektrischen Serienschaltung wird unter Verwendung einer geringen Anzahl von Stapelschichten in dem Brennstoffzellenstapel ein Stromfluß von jeweils einer Brennstoffzelle zu einer benachbarten Brennstoffzelle ermöglicht.

Die Energieausbeute eines erfindungsgemäßen Brennstoffzellenstapels wird besonders vorteilhaft beeinflußt, wenn das Temperaturprofil eines Fluidkanals an lokal gewünschte Temperaturen angepaßt wird. Dies ist insbesondere dann der Fall, wenn in einem zweiten Fluidkanal ein Betriebsgas strömt, das während des Betriebes der betreffenden Brennstoffzelle mit Wasser angereichert wird. In diesem Fall soll der Taupunkt des Betriebsgases in der gesamten Brennstoffzelle nur wenig von der tatsächlichen Temperatur des Betriebsgases abweichen, jedoch vorzugsweise immer kleiner oder gleich der tatsächlichen Temperatur des Betriebsgases sein.

Zu einer Anpassung des Temperaturprofils zumindest eines ersten Fluidkanals an lokal gewünschte Temperaturen variiert gemäß einer vorteilhaften Ausführungsform der Erfindung die Querschnittsfläche des Fluidkanals entlang einer Strömungsrichtung eines in dem Fluidkanal strömenden Fluids. Das bedeutet, daß die Querschnittsfläche des Fluidkanals an zumindest einer Stelle und/oder in zumindest einem Teilbereich kleiner oder größer als an anderen Stellen und/oder in anderen Teilbereichen ist. Dadurch wird eine Variation der Strömungsgeschwindigkeit des Fluids entlang des Fluidkanals erreicht, so daß auch eine Wärmeabgabe oder -aufnahme des Fluids in Bezug auf einen durchströmten Längenabschnitt des Fluidkanals entlang des Fluidkanals variiert. Dadurch wird eine Einstellung eines Temperaturprofils entlang des Fluidkanals ermöglicht.

Gemäß einer weiteren Ausführungsform eines erfindungsgemäßen Brennstoffzellenstapels ist eine thermische Trennung zwischen einem ersten und einem zweiten Fluidkanal in zumindest einem Teilbereich der zwei Fluidkanäle ausgebildet. Auch hierdurch wird ein Wärmeübertrag von einem Fluid in dem ersten Fluidkanal auf ein Fluid in dem zweiten Fluidkanal oder umgekehrt in Bezug auf einen durchströmten Längenabschnitt des ersten Fluidkanals entlang des ersten Fluidkanals variiert, wodurch das Temperaturprofil des Fluidkanals beeinflußbar ist.

Im Rahmen der Erfindung sind ein erster und ein zweiter Fluidkanal in einem Teilbereich voneinander thermisch getrennt, wenn ein Wärmeübertrag von dem ersten auf den zweiten Fluidkanal oder umgekehrt in dem Teilbereich gegenüber anderen Teilbereichen der zwei Fluidkanäle gehemmt ist. Das bedeutet, daß in dem Teilbereich ein verringerter Wärmeübertrag oder quasi kein Wärmeübertrag von dem ersten auf den zweiten Fluidkanal oder umgekehrt stattfindet. In beiden Fällen sind im Rahmen der Erfindung der erste und der zweite Fluidkanal in dem Teilbereich voneinander thermisch getrennt.

Gemäß einer bevorzugten Weiterbildung wird die bereichsweise thermische Trennung der zwei Fluidkanäle durch ein Isolationselement gebildet, das an eine Kanalwandung zumindest eines Fluidkanals angebracht wird. Das Isolationselement hemmt einen Wärmeübertrag von dem in dem zumindest einen Fluidkanal strömenden Fluid beziehungsweise auf das in dem Kanal strömende Fluid, wodurch eine thermische Trennung der zwei Fluidkanäle gemäß der vorliegenden Erfindung gewährleistet ist.

Besonders bevorzugt besteht das Isolationselement aus einem organischen und/oder einem keramischen Material. Da solche Materialien im allgemeinen eine relativ geringe Wärmeleitfähigkeit aufweisen, wird eine thermische Trennung der zwei Fluidkanäle mit einem eine geringe Dicke aufweisenden Isolationselement erreicht, so daß die Strömungseigenschaften des Fluids in dem Fluidkanal nicht oder nur wenig beeinträchtigt werden. Besonders vorteilhaft ist das Isolationselement als Beschichtung, beispielsweise als Lackierung, auf eine Kanalwandung auftragbar, wodurch Montageaufwand und-kosten gering sind.

Die Erfindung wird nachfolgend anhand von Ausführungsbeispielen unter Bezugnahme auf die Zeichnungen näher erläutert. Es zeigen:
- Fig. 1:: Eine schematische Schrägansicht eines Brennstoffzellenstapels;
- Fig. 2:: eine perspektivische Ansicht eines Ausschnitts eines Brennstoffzellenstapels;
- Fig. 3:: eine Querschnittsansicht einer Sepraratoreinheit;
- Fig. 4:: eine perspektivische Ansicht einer Sepraratoreinheit.

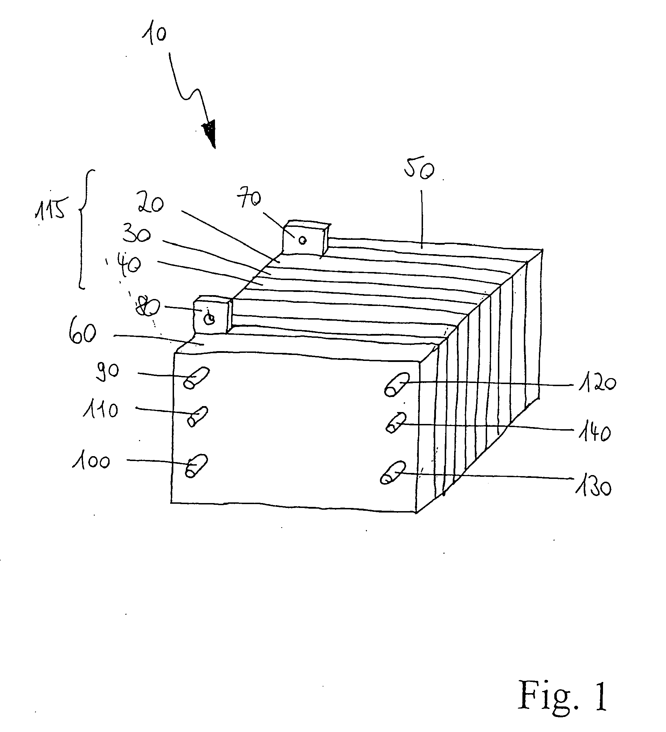

In Fig. 1 ist eine bevorzugte Ausführungsform eines Brennstoffzellenstapels 10 schematisch dargestellt. Der Brennstoffzellenstapel 10 ist aus mehreren Platten 20, 30 und 40 schichtartig aufgebaut und von Endplatten 50 und 60 eingefaßt. Zur Stromabnahme sind zwei Kontaktelemente 70 und 80 vorgesehen. Der Brennstoffzellenstapel weist für zwei Betriebsgase und ein Kühlmittel je eine nicht gezeigte Verteilkammer auf, die jeweils über einen Anschlußstutzen 90 und 100 mit Betriebsgasen und über einen Anschlußstutzen 110 mit einem Kühlmittel beaufschlagbar sind. Von der jeweiligen Verteilkammer aus durchströmen die Betriebsgase und das Kühlmittel den Brennstoffzellenstapel 115, um anschließend in je einer nicht dargestellten Sammelkammer aufgefangen zu werden. Schließlich verlassen die Betriebsgase den Brennstoffzellenstapel durch die Anschlußstutzen 120 und 130 und das Kühlmittel durch den Anschlußstutzen 140.

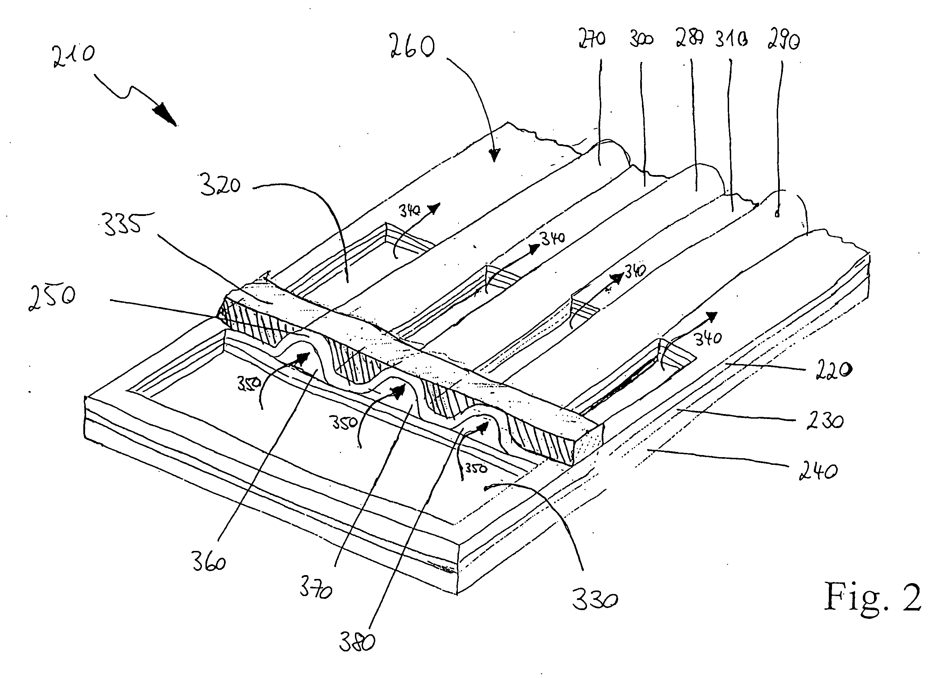

Fig. 2 zeigt eine perspektivische Darstellung eines Ausschnitts aus einem Brennstoffzellenstapel 210. Zu sehen sind drei Platten 220, 230 und 240, wobei die Platte 220 auf einer nicht sichtbaren Seite Vertiefungen 250 aufweist, die auf der gegenüberliegenden Seite 260 als Erhebungen 270, 280 und 290 zu sehen sind, die wiederum Vertiefungen 300 und 310 auf der Seite 260 der Platte 220 begrenzen. Die Vertiefungen 250 bilden zusammen mit einer ebenen Seite der benachbarten Platte 230 Fluidkanäle für ein Kühlmittel, während die Vertiefungen 300 und 310 der Bildung von Kanälen für ein Betriebsgas dienen.

Vier Verteilkammern 320 für das Betriebsgas und eine Verteilkammer 330 für das Kühlmittel werden durch Aussparungen in den Platten 220, 230 und 240 gebildet, wobei die Kühlmittelkammer 330 gegen die Betriebsgaskammern 320 mittels eines elastomeren Dichtstreifens 335 abgedichtet ist. Das Betriebsgas strömt aus den Verteilkammern 320 in Richtung der Pfeile 340 in die Kanäle 300 und 310, während das Kühlmittel aus der Verteilkammer 330 in Richtung der Pfeile 350 in die Kanäle 360, 370 und 380 strömt.

Das Betriebsgas beziehungsweise das Kühlmittel strömen anschließend gerichtet und parallel zueinander durch die Fluidkanäle 300 und 310 beziehungsweise 360, 370 und 380, die untereinander thermisch verbunden sind. Aufgrund eines Wärmeübertrages von dem Betriebsgas auf das Kühlmittel bildet sich entlang der Kühlmittelkanäle ein Temperaturprofil aus, das wiederum über die thermische Verbindung auf das Betriebsgas übertragen wird.

Aufgrund einer überschüssigen Wärme, die während eines Betriebes des Brennstoffzellenstapels 210 entsteht, wird das Kühlmittel beim Durchströmen der Kanäle 360, 370 und 380 aufgeheizt, so daß die Temperatur entlang dieser Kanäle ansteigt. Die Temperatur des Betriebsgases steigt dann entlang der Kanäle 300 und 310 ebenfalls an, so daß bei geeigneten Strömungsparametern wie beispielsweise Eintrittstemperatur oder Strömungsgeschwindigkeit der Fluide erreicht werden kann, daß der Taupunkt des Betriebsgases, der wegen der Anreicherung mit dem Reakionsprodukt Wasser ebenfalls entlang der Strömungskanäle 300 und 310 ansteigt, überall in der Brennstoffzelleneinheit etwas unterhalb oder gleich der tatsächlichen lokalen Temperatur ist. Auf diese Weise wird eine Vermeidung von/flüssig anfallendem Wasser in dem Betriebsgas erreicht, ohne daß eine Austrocknung einer nicht gezeigten Elektrolyteinheit in Kauf genommen werden muß. Die Leistungsausbeute der Brennstoffzelleneinheit wird dadurch gesteigert.

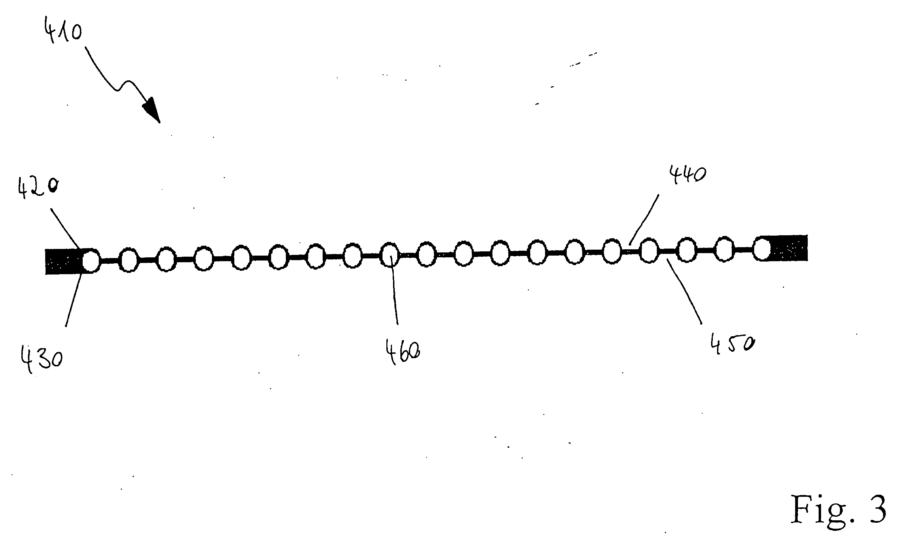

In Fig. 3 ist eine Separatoreinheit 410 in einem Querschnitt gezeigt. Die Separatoreinheit 410 besteht aus zwei zusammengefügten Metallplatten 420 beziehungsweise 430, die jeweils auf einer Seite Vertiefungen aufweisen, die der Bildung von Betriebsgaskanälen 440 beziehungsweise 450 dienen. Auf den jeweils gegenüberliegenden Seiten der Metallplatten 420 beziehungsweise 430 befinden sich ebenfalls Vertiefungen, wobei jeweils eine Vertiefung der Platte 420 einer Vertiefung der Platte 430 gegenübersteht, so daß jeweils zwei einander gegenüberstehende Vertiefungen einen Kühlmittelkanal 460 bilden.

Die Metallplatten sind zur Verwirklichung einer thermischen Verbindung zwischen den Betriebsgaskanälen 440 beziehungsweise 450 und den Kühlmittelkanälen 460 mit einer besonders geringen Dicke ausgestaltet, so daß die Kanäle 440 und die Kanäle 450 komplementär zu den Kanälen 460 angeordnet sind, womit eine gerichtete Durchströmbarkeit der Kanäle 440, 450 und 460 gewährleistet ist.

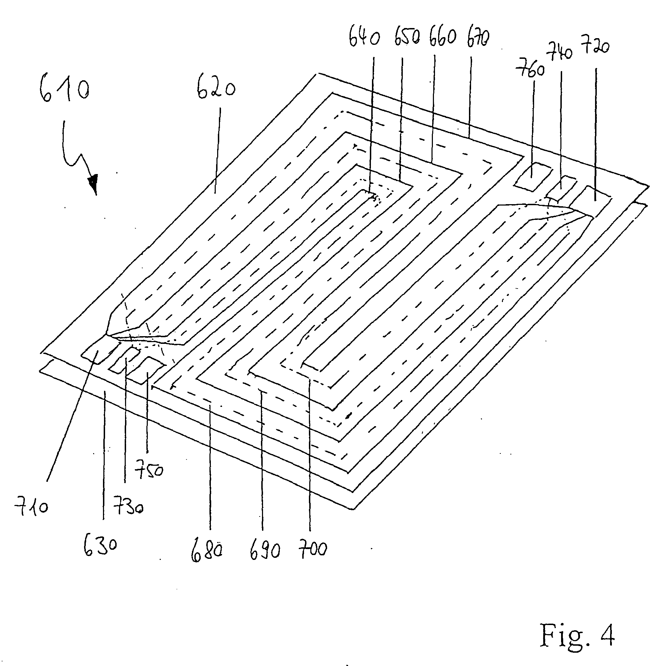

Fig. 4 zeigt eine Separatoreinheit 610 in perspektivischer Ansicht. Die Separatoreinheit 610 besteht wie die Separatoreinheit 410 in Fig. 3 aus zwei Metallplatten 620 und 630, die jeweils auf beiden Seiten Vertiefungen zur Bildung von Fluidkanälen aufweisen.

Die als durchgezogene Linien dargestellten Betriebsgaskanäle 640, 650, 660 und 670 werden durch Vertiefungen in der sichtbaren Oberseite der Metallplatte 620 gebildet und dienen der Beaufschlagung einer nicht gezeigten Elektrode mit einem Betriebsgas. Vertiefungen in der nicht sichtbaren Unterseite der Metallplatte 620 bilden alleine oder zusammen mit Vertiefungen in der durch die Platte 620 verdeckten Oberseite der Metallplatte 630 Kühlmittelkanäle, die durch gebrochene Linien 680, 690 und 700 angedeutet sind. Insbesondere in den Anfangs- und Endbereichen der Kanäle, wo Kühlmittelkanäle von Betriebsgaskanälen überquert werden, werden die Kühlmittelkanäle stellenweise nur durch Vertiefungen in einer Platte gebildet.

Die Betriebsgaskanäle 640, 650, 660 und 670 kommunizieren mit einer Verteilkammer 710 und einer Sammelkammer 720, während die Kühlmittelkanäle 680, 690 und 700 mit einer Verteilkammer 730 und einer Sammelkammer 740 verbunden sind. Verteil- bzw. Sammelkammern 750 und 760 dienen der Versorgung von nicht dargestellten Fluidkanälen mit einem zweiten Betriebsgas.

Während des Betriebes des Brennstoffzellenstapels wird das Kühlmittel, das durch die Kühlmittelkanäle 680, 690 und 700 strömt, durch anfallende Reaktionswärme aufgeheizt, wodurch die Temperatur des Kühlmittels entlang dieser Kanäle stetig ansteigt. Aufgrund des im wesentlichen parallelen Verlaufs der Betriebsgaskanäle 640, 650, 660 und 670 zu den Kühlmittelkanälen 680, 690 und 700 wird das ansteigende Temperaturprofil auf die Betriebsgaskanäle übertragen. Ähnlich wie bei der in Fig. 2 dargestellten Ausführungsform wird auf diese Weise eine Bildung von flüssigem Wasser in dem Betriebsgaskanal vermieden, so daß die Leistungsausbeute der Brennstoffzelleneinheit gesteigert wird.

## Patentansprüche

1. Brennstoffzellenstapel, insbesondere für ein Kraftfahrzeug, mit zumindest einer Brennstoffzelle, die zumindest einen Elektrolyten und zwei Elektroden aufweist, und zumindest einer Separatoreinheit, die zumindest einen ersten Fluidkanal aufweist, wobei zumindest eine Elektrode über zumindest einen zweiten Fluidkanal mit einem Fluid beaufschlagbar ist, **dadurch gekennzeichnet, daß** zumindest ein zweiter Fluidkanal im wesentlichen über seine gesamte Länge im wesentlichen parallel zu zumindest einem ersten Fluidkanal angeordnet ist.

2. Brennstoffzellenstapel nach Anspruch 1, **dadurch gekennzeichnet, daß** im Betrieb der zumindest einen Brennstoffzelle die Temperatur eines Fluids entlang des zumindest einen zweiten Fluidkanals stetig ansteigt.

3. Brennstoffzellenstapel nach Anspruch 1 oder 2, **dadurch gekennzeichnet, daß** der zumindest eine erste und der zumindest eine zweite Fluidkanal gleichgerichtet durchströmbar sind.

4. Brennstoffzellenstapel nach Anspruch 1, **dadurch gekennzeichnet, daß** im Betrieb der zumindest einen Brennstoffzelle die Temperatur eines Fluids entlang des zumindest einen zweiten Fluidkanals stetig abfällt.

5. Brennstoffzellenstapel nach Anspruch 1 oder 4, **dadurch gekennzeichnet, daß** der zumindest eine erste und der zumindest eine zweite Fluidkanal in entgegengesetzten Richtungen durchströmbar sind.

6. Brennstoffzellenstapel nach einem der Ansprüche 1 bis 5, **gekennzeichnet durch** zumindest je eine Kammer zur Verteilung je eines Fluids auf mehrere erste beziehungsweise zweite Fluidkanäle und zumindest je eine Kammer zur Sammlung je eines Fluids aus den ersten beziehungsweise zweiten Fluidkanälen.

7. Brennstoffzellenstapel nach Anspruch 6, **dadurch gekennzeichnet, daß** die Verteil- bzw. Sammelkammern über Verteilungskanäle mit den ersten oder zweiten Fluidkanälen kommunizieren, wobei die Verteilungskanäle durch zumindest stellenweise miteinander kommunizierende Vertiefungen zweier benachbarter Platten gebildet werden.

8. Brennstoffzellenstapel nach einem der Ansprüche 1 bis 7, **dadurch gekennzeichnet, daß** zumindest eine Separatoreinheit aus zwei Platten besteht, zwischen denen der zumindest eine erste Fluidkanal angeordnet ist.

9. Brennstoffzellenstapel nach einem der Ansprüche 1 bis 7, **dadurch gekennzeichnet, daß** zumindest eine Separatoreinheit aus drei Platten besteht, wobei auf zumindest einer Seite einer mittleren Platte erste Fluidkanäle angeordnet sind.

10. Brennstoffzellenstapel nach einem der Ansprüche 1 bis 9, **dadurch gekennzeichnet, daß** zumindest eine Separatoreinheit im wesentlichen aus einem elektrisch leitfähigen, Material, wie beispielsweise einem Metall, besteht.

11. Brennstoffzellenstapel nach einem der Ansprüche 1 bis 10, **dadurch gekennzeichnet, daß** die Querschnittsfläche zumindest eines ersten Fluidkanals entlang einer Strömungsrichtung eines Fluids variiert.

12. Brennstoffzellenstapel nach einem der Ansprüche 1 bis 11, **dadurch gekennzeichnet, daß** eine thermische Trennung zwischen einem ersten und einem zweiten Fluidkanal in zumindest einem Teilbereich der zwei Fluidkanäle ausgebildet ist.

13. Brennstoffzellenstapel nach Anspruch 12, **dadurch gekennzeichnet, daß** eine bereichsweise thermische Trennung der zwei Fluidkanäle durch ein an eine Kanalwandung zumindest eines Fluidkanals angebrachtes, aus einem organischen und/oder einem keramischen Material bestehendes Isolationselement gebildet wird.

14. Brennstoffzellenstapel nach Anspruch 13, **dadurch gekennzeichnet, daß** das Isolationselement als Beschichtung, beispielsweise als Lakkierung, auf eine Kanalwandung auftragbar ist.

## Claims

1. A fuel cell stack, in particular for a motor vehicle, having at least one fuel cell which has at least one electrolyte and two electrodes, and at least one separator unit which has at least one first fluid channel, it being possible to apply fluid to at last one electrode via at least one second fluid channel,
**characterised in that**
essentially the entire length of at least one second fluid channel is positioned essentially parallel to at least one first fluid channel.

2. A fuel cell stack in accordance with claim 1,
**characterised in that**
when the at least one fuel cell is in operation the temperature of a fluid along the at least one second fluid channel increases constantly.

3. A fuel cell stack in accordance with claim 1 or 2,
**characterised in that**
fluid is able to flow through the at least one first and the at least one second fluid channel in the same direction.

4. A fuel cell stack in accordance with claim 1,
**characterised in that**
when the at least one fuel cell is in operation the temperature of a fluid along the at least one second fluid channel decreases constantly.

5. A fuel cell stack in accordance with claim 1 or 4,
**characterised in that**
fluid is able to flow through the at least one first and the at least one second fluid channel in opposite directions.

6. A fuel cell stack in accordance with one of claims 1 to 5,
**characterised by**
at least one chamber for distributing one fluid into several first/second fluid channels and at least one chamber for collecting one fluid from the first/second fluid channels.

7. A fuel cell stack in accordance with claim 6,
**characterised in that**
the distribution and collection chambers communicate with the first or second fluid channels by means of distribution channels, the distribution channels taking the form of recesses in two adjacent plates which communicate with one another at at least certain points.

8. A fuel cell stack in accordance with one of claims 1 to 7,
**characterised in that**
at least one separator unit consists of two plates between which is positioned the at least one first fluid channel.

9. A fuel cell stack in accordance with one of claims 1 to 7,
**characterised in that**
at least one separator unit consists of three plates, first fluid channels being positioned on at least one side of a central plate.

10. A fuel cell stack in accordance with one of claims 1 to 9,
**characterised in that**
at least one separator unit consists essentially of an electrically conductive material such as a metal, for example.

11. A fuel cell stack in accordance with one of claims 1 to 10,
**characterised in that**
the cross-sectional area of at least one first fluid channel varies along a flow direction of a fluid.

12. A fuel cell stack in accordance with one of claims 1 to 11,
**characterised in that**
a thermal separation between a first and a second fluid channel is provided in at least one section of the two fluid channels.

13. A fuel cell stack in accordance with claim 12,
**characterised in that**
a thermal separation of the two fluid channels in certain areas takes the form of an insulating element consisting of an organic and/or a ceramic material mounted on a channel wall of at least one fluid channel.

14. A fuel cell stack in accordance with claim 13,
**characterised in that**
the insulating element can be applied as a coating, for example a coat of lacquer, on a channel wall.

## Revendications

1. Pile de cellules de combustible, en particulier pour un véhicule automobile, comprenant au moins une cellule de combustible, qui présente au moins un électrolyte et deux électrodes, et au moins une unité séparatrice, qui présente au moins un premier canal pour fluide, au moins une électrode pouvant être alimentée avec un fluide par au moins un second canal pour fluide, **caractérisée en ce qu'**au moins un second canal pour fluide est disposé sensiblement sur toute sa longueur sensiblement parallèlement à au moins un premier canal pour fluide.

2. Pile de cellules de combustible selon la revendication 1, **caractérisée en ce que**, pendant l'exploitation de la au moins une cellule de combustible, la température d'un fluide augmente constamment le long du au moins un second canal pour fluide.

3. Pile de cellules de combustible selon la revendication 1 ou 2, **caractérisée en ce que** le au moins un premier et le au moins un second canal pour fluide peuvent être parcourus dans le même sens.

4. Pile de cellules de combustible selon la revendication 1, **caractérisée en ce que**, pendant l'exploitation de la au moins une cellule de combustible, la température d'un fluide décroit constamment le long du au moins un second canal pour fluide.

5. Pile de cellules de combustible selon la revendication 1 ou 4, **caractérisée en ce que** le au moins un premier et le au moins un second canal pour fluide peuvent être parcourus dans des directions opposées.

6. Pile de cellules de combustible selon l'une quelconque des revendications 1 à 5, **caractérisée par** au moins une chambre pour la répartition d'un fluide entre plusieurs premiers ou seconds canaux pour fluide et au moins une chambre pour la collecte d'un fluide provenant des premiers ou des seconds canaux pour fluide.

7. Pile de cellules de combustible selon la revendication 6, **caractérisée en ce que** les chambres de répartition ou de collecte communiquent par des canaux de répartition avec les premiers ou seconds canaux pour fluide, les canaux de répartition étant formés par des cavités, communiquant entre elles au moins par endroits, de secondes plaques voisines.

8. Pile de cellules de combustible selon l'une quelconque des revendications 1 à 7, **caractérisée en ce qu'**au moins une unité séparatrice est constituée de deux plaques, entre lesquelles est disposé le au moins un premier canal pour fluide.

9. Pile de cellules de combustible selon l'une quelconque des revendications 1 à 7, **caractérisée en ce qu'**au moins une unité séparatrice est constituée de trois plaques, des premiers canaux pour fluide étant disposés sur au moins un côté d'une plaque centrale.

10. Pile de cellules de combustible selon l'une quelconque des revendications 1 à 9, **caractérisée en ce qu'**au moins une unité séparatrice est constitué essentiellement d'un matériau électro-conducteur, comme par exemple un métal.

11. Pile de cellules de combustible selon l'une quelconque des revendications 1 à 10, **caractérisée en ce que** la surface de section d'au moins un premier canal pour fluide varie le long d'un sens d'écoulement d'un fluide.

12. Pile de cellules de combustible selon l'une quelconque des revendications 1 à 11, **caractérisée en ce qu'**une séparation thermique entre un premier canal pour fluide et un second canal pour fluide est réalisée dans au moins une zone partielle des deux canaux pour fluide.

13. Pile de cellules de combustible selon la revendication 12, **caractérisée en ce qu'**une séparation thermique par endroits des deux canaux pour fluide est formée par un élément d'isolation placé sur une paroi de canal d'au moins un canal pour fluide, et est constitué d'un matériau organique et/ou d'un matériau céramique.

14. Pile de cellules de combustible selon la revendication 13, **caractérisée en ce que** l'élément d'isolation peut être appliqué sous forme de revêtement, par exemple sous forme de peinture, sur une paroi de canal.
